# EUROPÄISCHE PATENTSCHRIFT

(11) **EP 1 835 219 B1**
(45) Veröffentlichungstag und Bekanntmachung des Hinweises auf die Patenterteilung: **30.06.2010**
(21) Anmeldenummer: 06025459.6
(22) Anmeldetag: 08.12.2006
(51) Int. Cl.: F16L 23/028, F16L 33/22, F16L 47/14

(54) **Verbindungsvorrichtung**
Connecting device
Dispositif de connexion

(30) Priorität: 17.03.2006 DE 102006012410
(43) Veröffentlichungstag der Anmeldung: 19.09.2007
(73) Patentinhaber: VERITAS AG, 63571 Gelnhausen (DE)
(72) Erfinder: Ennin, John, 63526 Erlensee (DE); Teichmann, Timo, 63825 Krombach (DE); Haberland, Anja, 63599 Biebergemünd (DE); Enders, Andre, 63825 Schöllkrippen (DE)
(74) Vertreter: Grünecker, Kinkeldey, Stockmair & Schwanhäusser Anwaltssozietät

(56) Entgegenhaltungen:
- EP-A1- 0 515 930
- FR-A- 2 538 074
- GB-A- 1 553 220
- US-A- 5 562 311
- US-A- 5 622 393

## Beschreibung

Nach dem Oberbegriff des Anspruchs 1 bezieht sich die Erfindung auf eine Verbindungsvorrichtung zum Verbinden einer Leitung für den Transport von Medien, die einen Flansch mit einem Mediendurchlass zum Durchleiten eines Mediums entlang einer Durchflussrichtung, vorzugsweise entlang einer Symmetrieachse, und eine Spanneinrichtung umfasst, wobei der Flansch einen Anlageabschnitt und die Spanneinrichtung einen Spannabschnitt aufweist, und der Flansch und die Spanneinrichtung lösbar miteinander verbindbar sind, so dass ein Endabschnitt der Leitung zwischen Anlageabschnitt und Spannabschnitt einklemmbar ist.

Aus der US 5 562 311 ist eine solche Verbindungsvorrichtung bekannt.

Aus der DE 1175504 ist eine weitere Verbindungsvorrichtung zum Anschluss eines Schlauches an eine Rohrleitung bekannt. Der starre Rohrflansch (5) weist hierbei einen Anlageabschnitt auf, der in montiertem Zustand mit dem Schlauch in Kontakt kommt. Dieser Anlageabschnitt ist senkrecht gegenüber der Rohr- bzw. Schlauchlängsachse angeordnet. Der Endabschnitt des Schlauches ist entsprechend geformt, .d.h. auch er ist senkrecht gegenüber der Schlauchlängsachse angeordnet und besitzt somit eine Flanschform. Dieser elastische Flansch (1) ist fest in den Schlauch eingearbeitet. Mit Hilfe eines Losflansches (4) wird der elastische Flansch (1) in einer Richtung parallel zur Rohr- bzw. Schlauchlängsachse gegen den starren Rohrflansch (5) gepresst. Dies geschieht über Schraubverbindungen, wozu Rohrflansch, flexibler Flansch und Losflansch Durchgangsbohrungen aufweisen, die entlang, eines Lochkreises angeordnet sind. Zur Verbindung von Rohrflansch, flexiblem Flansch und Losflansch wird der Schaft der Schrauben, beispielsweise von der Rohrflanschseite aus, durch sämtliche, zur Deckung gebrachten Durchgangsbohrungen geschoben, bis der Schraubenkopf in Anlage mit dem Rohrflansch kommt. Auf den auf der gegenüberliegenden Losflanschseite herausschauenden Teil des Schaftes wird eine Mutter aufgesetzt und festgedreht, wodurch sie in Anlage mit dem Losflansch kommt und diesen in Richtung des Rohrflansches bewegt, wobei der dazwischen angeordnete flexible Flansch eingeklemmt wird. Zur Verstärkung des flexiblen Flansches ist in der Nähe des Lochkreises ein metallischer Stützring (3) in die im flexiblen Flansch vorhandene Nut (2) eingesetzt.

Nachteilig bei der aus dem Stand der Technik bekannten Verbindungsvorrichtung ist der relativ hohe fertigungs- bzw. bearbeitungstechnische Aufwand, um den Endabschnitt des Schlauchs in die dargestellte bleibende Form eines Flansches zu bringen. Ebenso bedeutet es einen hohen Montageaufwand, Rohrflansch, flexiblen Flansch und Losflansch miteinander zu verbinden. Im ersten Schritt muss dazu der Stützring am flexiblen Flansch montiert werden. Anschließend müssen sämtliche Durchgangsbohrungen zur Deckung gebracht werden, um dann wie oben beschrieben die Schraubverbindungen anzubringen. Hierbei ist darauf zu achten, dass sich die einzelnen miteinander zu verbindenden Teile nicht wesentlich gegeneinander verschieben. Verschiebt sich beispielsweise der flexible Flansch gegenüber dem Rohrflansch, so kann hieraus eine Stufe bezüglich des Innendurchmessers beim Übergang von flexiblem Flansch zu Rohrflansch resultieren, was sich negativ auf die Strömung in diesem Bereich auswirken kann.

Ebenfalls nachteilig bei der beschriebenen Verbindungsvorrichtung ist die nur beschränkte Möglichkeit, hohe Presskräfte auf den flexiblen Flansch in den Bereichen aufzubringen, die von der Angriffsfläche des Losflansches in radialer Richtung beabstandet sind. Dies wirkt sich negativ vor allen Dingen auf den Bereich des flexiblen Flansches aus, der von der Angriffsfläche des Losflansches in radial nach innen weisender Richtung beabstandet ist. Sind die Presskräfte hier nur unzureichend, kann eine vollständige Anlage des flexiblen Flansches an den Anlageabschnitt nicht gewährleistet werden. Bei nur unvollständiger Anlage kommt es hierbei jedoch zu einer Lücke zwischen Schlauch und Rohrflansch. Aufgrund der beschriebenen Lücke kann durch dort eindringende Medien eine erhebliche Belastung bezüglich des eingespannten Abschnitts des Schlauches entstehen, die zu Undichtigkeiten oder zu Rissen innerhalb des Schlauches führen kann.

Weiterhin von Nachteil bezüglich der in der DE 1175504 beschriebenen Verbindungsvorrichtung ist die Tatsache, dass der Flanschbereich des Schlauches mehrere, über den Umfang verteilte Durchgangsbohrungen aufweist, durch welche die Schrauben der Schraubverbindungen hindurch gesteckt werden. Die Anordnung von Durchgangsbohrungen im Flanschbereich des Schlauches ist bei der bekannten Verbindungsvorrichtung deshalb vorhanden, um eine relativ gleichmäßige Druckverteilung des Losflansches auf den flexiblen Flansch zumindest im Bereich der Angriffsfläche des Losflansches zu erzielen. Hierbei drückt der Losflansch mit seiner Angriffsfläche sowohl auf einen Abschnitt des flexiblen Flansches, der sich an die Durchgangsbohrung in radial nach außen weisender Richtung anschließt, als auch auf einen Abschnitt des flexiblen Flansches, der sich an die Durchgangsbohrung in radial nach innen weisender Richtung anschließt. Allerdings bedeuten besagte Durchgangsbohrungen im Flanschbereich des Schlauches eine erhebliche Materialschwächung, die zu einem Aufweiten bzw. Ausreißen der Flanschlöcher führen kann.

Aufgabe der Erfindung ist es daher, eine Verbindungsvorrichtung zu schaffen, welche die aufgeführten Nachteile des Standes der Technik vermeidet.

Diese Aufgabe wird erfindungsgemäß gelöst durch die im Anspruch 1 definierte Verbindungsvorrichtung.

Es hat sich gezeigt, dass die erfindungsgemäße Verbindungsvorrichtung eine einfache und schnelle Verbindung zwischen Flansch, Spanneinrichtung und Leitung erlaubt, ohne zwangsläufig den Endabschnitt der Leitung vorher durch aufwändige und zeitintensive Maßnahmen in eine spezielle Form bringen zu müssen. Durch die Geometrie des Anlageabschnittes kann die Leitung ohne großen Aufwand auf den Flansch geschoben werden, wobei die Leitung gleichzeitig bezüglich des Mediendurchlasses zentriert wird und sicher in einer optimierten Position gehalten wird. Die nachfolgende Befestigung der Spanneinrichtung gelingt dadurch problemlos, und die Möglichkeit eines Verschiebens der miteinander zu verbindenden Teile, insbesondere das Verschieben der Leitung gegenüber dem Flansch bzw. dem Mediendurchlass, ist nahezu nicht mehr gegeben.

Die Geometrie des Anlageabschnittes führt zudem zu einem strömungsgünstigen Verlauf hinsichtlich des Innendurchmessers beim Übergang von Leitung zu Mediendurchlass. Hierbei kommt es auch ohne formgebende Bearbeitung des Endabschnitts der Leitung zu einer im Wesentlichen vollständigen Anlage der Leitung an den Anlageabschnitt. Gleichzeitig forciert in montiertem Zustand die Spanneinrichtung die Anlage der Leitung an den Anlageabschnitt. Die Gefahr, dass das Medium zwischen Leitung und Verbindungsvorrichtung gelangt und somit eine Leckage auftreten kann, ist dadurch deutlich reduziert.

Die Klemmung der Leitung zwischen Anlageabschnitt und Spannabschnitt führt aufgrund ihrer Geometrie zu einer äußerst stabilen und sicheren Verbindung, die höchsten Anforderungen an Mediendichtigkeit genügt. Hierbei kommt es zu einer hohen und über die Anlagefläche gleichmäßig verteilten Presskraft, die auf die eingeklemmte Leitung wirkt. Das Anordnen von Befestigungseinrichtungen, wie beispielsweise Schrauben, im Klemmbereich der Leitung ist dabei nicht nötig, weshalb eine Schwächung des Materials der Leitung bei der erfindungsgemäßen Verbindungsvorrichtung, etwa durch Durchgangsbohrungen, vermieden wird.

Es kann von Vorteil sein, dass der Anlageabschnitt und/oder der Spannabschnitt zumindest abschnittsweise im Wesentlichen konusförmig ausgebildet ist. Diese Geometrie erlaubt beispielsweise beim Flansch eine einfache Montage der Leitung auf diesem. Sie führt darüber hinaus zu einer sicheren und stabilen Klemmung der Leitung zwischen Anlageabschnitt und Spannabschnitt. Gleichzeitig ist besagte Geometrie vergleichsweise einfach und kostengünstig herzustellen.

Ebenso kann es von Vorteil sein, dass der Anlageabschnitt und/oder der Spannabschnitt ringförmig ausgebildet ist. Daraus resultiert eine besonders sichere und stabile Klemmung zwischen Anlageabschnitt und Spannabschnitt bei gleichförmigerer Pressung.

Zudem kann es von Vorteil sein, dass der Innendurchmesser des Mediendurchlasses zumindest abschnittsweise im Wesentlichen dem Innendurchmesser der Leitung entspricht. Dies kann sich günstig auf die Strömung des Mediums auswirken.

Außerdem kann es von Vorteil sein, dass zumindest der der Leitung zugewandte Abschnitt des Mediendurchlasses einen Innendurchmesser aufweist, der im Wesentlichen dem Innendurchmesser der Leitung entspricht. Dies wirkt sich besonders günstig auf die Strömung des Mediums im Bereich des Übergangs von Leitung zu Flansch aus.

Vorteilhaft kann sein, dass sich an den Mediendurchlass in radial nach außen weisender Richtung der Anlageabschnitt anschließt.' Dadurch gelingt eine sehr kompakte Bauweise des Flansches.

Vorteilhaft kann auch sein, dass der Anlageabschnitt außenseitig angeordnet ist. Dies hat fertigungs- und montagetechnische Vorteile.

Es kann sich als günstig erweisen, dass die die Außenkontur des Anlageabschnitts bildenden Flächen einen Konus formen und einen Winkel α zwischen 30 und 90° einschließen. Bei dieser Geometrie ergibt sich eine einfache Montage der Leitung auf dem Flansch, die zu günstigen geometrischen Abmessungen des Flansches führt und dabei eine gute Klemmbarkeit der Leitung zwischen Anlage- und Spannabschnitt erlaubt.

Es kann sich zudem als günstig erweisen, dass die die Außenkontur des Anlageabschnitts bildenden Flächen einen Konus formen und einen Winkel α von 60° einschlie-ßen. Diese Geometrie führt zu einer besonders guten Kombination aus einer günstigen geometrischen Abmessung des Flansches und guter Klemmbarkeit der Leitung zwischen Anlage- und Spannabschnitt.

Weiterhin kann es günstig sein, dass der Anlageabschnitt wenigstens einen Vorsprung aufweist. Dies ermöglicht eine zumindest abschnittsweise formschlüssige Verbindung zwischen Anlageabschnitt und Leitung.

Dabei kann es vorteilhaft sein, dass der wenigstens eine Vorsprung umlaufend ist. Hieraus resultiert ein verbesserter Formschluss zwischen Anlageabschnitt und Vorsprung.

Außerdem ist es erfindungsgemäß, dass sich in radial nach außen weisender Richtung an den Anlageabschnitt ein ringförmiger Aufnahmeabschnitt zur zumindest teilweisen Aufnahme des Endabschnitts der Leitung anschließt. Dies führt zu einem sehr sicheren Halten der Leitung auf dem Flansch während der Montage, und unterstützt die Zentrierung der Leitung bezüglich des Flansches bzw. des Mediendurchlasses. Der Aufnahmeabschnitt weist eine Nut auf. Diese Geometrie unterstützt das sichere Halten der Leitung auf dem Flansch in günstiger Weise, und ist zudem vergleichsweise einfach zu fertigen. Weiterhin entspricht die Breite der Nut des Aufnahmeabschnitts im Wesentlichen der Wanddicke der Leitung. Hierdurch wird ein besonders sicheres Halten der Leitung auf dem Flansch unterstützt.

Von Vorteil kann es sein, dass sich in radial nach außen weisender Richtung an den Aufnahmeabschnitt des Flansches ein Befestigungsabschnitt anschließt. Hierdurch gelingt einerseits die Befestigung des Flansches an einem anderen Teil, andererseits dient dieser Abschnitt zur Befestigung der Spanneinrichtung am Flansch.

Von Vorteil kann es ebenso sein, dass die Dicke des Befestigungsabschnitts zwischen einem Drittel und einem Sechstel der maximalen Höhe des Flansches im Bereich des Anlageabschnitts entspricht. Daraus resultiert ein mechanisch stabiler Befestigungsabschnitt, der gleichzeitig nur relativ wenig Material beansprucht und damit zur Gewichtsreduzierung des Flansches beiträgt.

Von Vorteil kann es zudem sein, dass der Befestigungsabschnitt wenigstens eine Durchgangsbohrung für die Befestigung des Flansches an einem anderen Teil aufweist. Damit ist eine Möglichkeit zur Montage des Flansches an einem anderen Teil gegeben.

Von Vorteil kann es außerdem sein, dass der Befestigungsabschnitt wenigstens eine Befestigungseinrichtung zur Befestigung der Spanneinrichtung am Flansch aufweist. Damit ist eine Möglichkeit zur Montage der Spanneinrichtung am Flansch gegeben.

Hierbei kann es vorteilhaft sein, dass die Befestigungseinrichtung ein Gewinde aufweist. Daraus resultiert eine besonders einfache Möglichkeit zur Befestigung der Spanneinrichtung am Flansch.

Es kann sich als günstig erweisen, dass die Spanneinrichtung einen Spannring mit zwei gegenüberliegenden, im Wesentlichen parallelen Oberflächen umfasst, deren Abstand im Wesentlichen der maximalen Höhe des Flansches im Bereich des Anlageabschnitts entspricht. Damit wird ein umlaufender und großflächiger Kontakt der Spanneinrichtung mit der Leitung ermöglicht bei gleichzeitig sehr kompakten und raumsparenden Abmessungen der miteinander verbundenen Teile.

Zudem kann es sich als günstig erweisen, dass der Spannring auf seiner Innenseite wenigstens den Spannabschnitt aufweist. Daraus resultiert eine sichere und stabile Klemmung der Leitung zwischen Anlageabschnitt und Spannabschnitt.

Außerdem kann es günstig sein, dass der Spannabschnitt zumindest bis zu einer der Oberflächen des Spannrings reicht. Dadurch resultiert eine gute Klemmung der Leitung zwischen Anlage- und Spannabschnitt mit hohen Klemmkräften bis hin zur entsprechenden Oberfläche des Spannrings.

Es kann vorteilhaft sein, dass die die Innenkontur des Spannabschnitts und die die Außenkontur des Anlageabschnitts bildenden Flächen im montierten Zustand im Wesentlichen parallel zueinander angeordnet sind, wobei zwischen ihnen der Endabschnitt der Leitung eingeklemmt ist. Hieraus resultiert eine stabile und zuverlässige Klemmverbindung mit sehr gleichmäßiger Pressung bei großer Kontaktfläche.

Darüber hinaus kann vorteilhaft sein, dass der Spannabschnitt wenigstens einen Vorsprung aufweist. Dadurch ist die Möglichkeit zu einer zumindest abschnittsweisen formschlüssigen Verbindung zwischen Spannabschnitt und Leitung gegeben. Zudem kann der Vorsprung Vorteile hinsichtlich eines erleichterten Zusammenbaus von Flansch, Leitung und Spanneinrichtung bringen.

Dabei kann es günstig sein, dass der wenigstens eine Vorsprung umlaufend ist. Dadurch ist ein verbesserter Formschluss zwischen Spannabschnitt und Leitung möglich.

Auch kann günstig sein, dass der Spannring zumindest einen Übergangsabschnitt aufweist, der sich an den Spannabschnitt in axialer Richtung anschließt. Der Übergangsabschnitt bewirkt dabei im entsprechenden Bereich eine Entlastung hinsichtlich der Pressung auf die Leitung.

Zudem kann günstig sein, dass der Spannring im Bereich des Übergangsabschnitts einen minimalen Innenradius aufweist, der im Wesentlichen dem Außenradius der Leitung entspricht. Hieraus resultieren im Bereich des Übergangsabschnitts günstige Klemm- bzw. Pressungsverhältnisse.

Weiterhin kann es günstig sein, dass der Übergangsabschnitt im Querschnitt einen Radius aufweist. Dies wirkt sich günstig auf die maximale Pressung bzw. die Pressungsverteilung auf die Leitung im entsprechenden Bereich aus.

Es kann darüber hinaus von Vorteil sein, dass der Übergangsabschnitt bis zu einer der beiden Oberflächen des Spannrings reicht. Hieraus ergeben sich günstige Klemm- bzw.

Pressungsverhältnisse bezüglich der Leitung im Bereich der Oberflächen des Spannrings.

Ebenso kann von Vorteil sein, dass der Übergangsabschnitt eine geringere Ausdehnung in axialer Richtung aufweist als der Spannabschnitt. Der entsprechend großflächige Kontakt zwischen Spannabschnitt und Leitung wirkt sich günstig auf die Klemmung der Leitung aus.

Zudem kann von Vorteil sein, dass die Spanneinrichtung wenigstens eine Durchgangsbohrung aufweist. Das kann montagetechnische Vorteile mit sich bringen.

Von Vorteil kann auch sein, dass die Spanneinrichtung wenigstens einen Befestigungsbereich zum Befestigen der Spanneinrichtung mit dem Flansch aufweist. Dadurch wird die Verbindung zwischen Spanneinrichtung und Flansch auf einfache Weise ermöglicht.

Vorteilhaft kann sein, dass der Endabschnitt der Leitung im Wesentlichen konusartig geformt ist. Dies erleichtert das Aufschieben der Leitung auf den Flansch.

Vorteilhaft kann ebenso sein, dass die die Außenkontur des Endabschnitts der Leitung bildenden Flächen einen Konus formen und einen Winkel einschließen, der dem Winkel β entspricht, den die die Innenkontur des Spannabschnitts bildenden und einen Konus formenden Flächen einschließen, und die die Innenkontur des Endabschnitts der Leitung bildenden Flächen einen Winkel einschließen, der dem Winkel α entspricht, den die die Außenkontur des Anlageabschnitts bildenden und einen Konus formenden Flächen einschließen. Dadurch ergibt sich eine besonders gute Anlage der Leitung an den Anlageabschnitt bzw. den Spannabschnitt und eine dementsprechend sichere und verlässliche Klemmung. Zudem ergibt sich eine besonders leichte Montage der Leitung an der Verbindungsvorrichtung.

Vorteilhaft kann weiterhin sein, dass der Endabschnitt der Leitung mediendicht zwischen Anlageabschnitt und Spannabschnitt einklemmbar ist. Dadurch kann eine Leckage von mitunter gefährlichen Medien verhindert werden.

Es kann sich als günstig erweisen, dass der Endabschnitt der Leitung zumindest abschnittsweise kraftschlüssig zwischen Anlageabschnitt und Spannabschnitt gehalten wird. Damit gelingt eine sichere und zuverlässige Klemmung der Leitung.

Außerdem kann es sich als günstig erweisen, dass der Endabschnitt der Leitung zumindest abschnittsweise formschlüssig zwischen Anlageabschnitt und Spannabschnitt gehalten wird. Der zumindest abschnittsweise Formschluss unterstützt in vorteilhafter Weise das Halten der Leitung zwischen Anlageabschnitt und Spannabschnitt.

Weiterhin kann es sich als günstig erweisen, dass die Leitung flexibel ist. Dies bringt Vorteile hinsichtlich der Montage und der Klemmung bzw. der Anlage der Leitung an den Anlageabschnitt bzw. den Spannabschnitt.

Es kann von Vorteil sein, dass die Leitung aus einem polymeren Werkstoff, vorzugsweise aus einem Elastomer, besteht. Polymere Werkstoffe zeichnen sich in erster Linie durch ihre gute Verarbeitbarkeit und ihr geringes Gewicht aus, zudem besitzen oftmals eine gute Chemikalienbeständigkeit. Elastomere zeichnen sich insbesondere durch eine äußerst hohe Flexibilität bei gleichzeitig hohem Dämpfungsvermögen aus, die sie für Anwendungen unter Schwingungsbeanspruchung prädestiniert.

Ein weiterer Vorteil kann es sein, dass der Flansch und die Spanneinrichtung starr sind. Hieraus ergeben sich mechanische Vorteile hinsichtlich Kraftaufbringung bzw. Pressung mit Hinblick auf die zwischen Flansch und Spanneinrichtung eingeklemmte Leitung.

Zudem kann es von Vorteil sein, dass der Flansch und die Spanneinrichtung aus einem metallischen Werkstoff, vorzugsweise aus Aluminium, bestehen. Metallische Werkstoffe zeichnen sich durch sehr gute mechanische Eigenschaften aus, wobei Aluminium zudem eine relativ geringer Dichte aufweist, so dass bei Verwendung dieses Materials das Gewicht von Flansch und Spanneinrichtung niedrig gehalten werden kann.

Die Erfindung bezieht sich ebenso auf eine Leitung für den Transport von Medien mit der beschriebenen Verbindungsvorrichtung.

Nachfolgend wird die Wirkungs- und Funktionsweise der Erfindung näher erläutert.

Es zeigen:
- Fig. 1a:: Ausführungsform eines Flansches der erfindungsgemäßen Verbindungsvorrichtung in Draufsicht;
- Fig. 1b:: Ausführungsform eines Flansch der erfindungsgemäßen Verbindungsvorrichtung im Querschnitt;
- Fig. 1c:: Darstellung eines Details aus Figur 1 b;
- Fig. 2a:: Ausführungsform einer Spanneinrichtung der erfindungsgemäßen Verbindungsvorrichtung in Draufsicht;
- Fig. 2b:: Ausführungsform einer Spanneinrichtung der erfindungsgemäßen Verbindungsvorrichtung im Querschnitt;
- Fig. 2c:: Darstellung eines Details aus Figur 2b;
- Fig. 3:: Ausführungsform der erfindungsgemäßen Verbindungsvorrichtung zusammen mit Leitung in Explosionsdarstellung;
- Fig. 4:: Ausführungsform der erfindungsgemäßen Verbindungsvorrichtung mit Leitung im Zusammenbau.

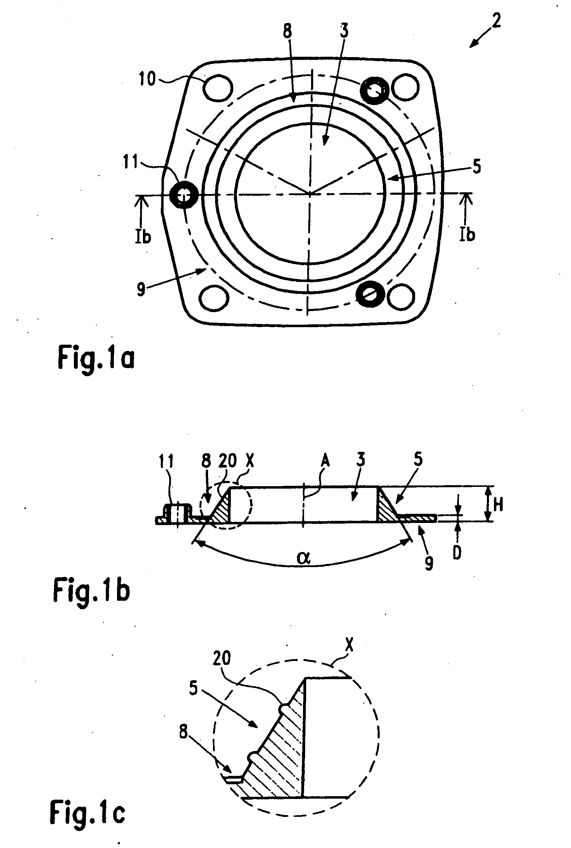

Die Figuren 1a und 1b zeigen eine Ausführungsform eines Flansches der erfindungsgemäßen Verbindungsvorrichtung in Querschnitt und in Draufsicht.

Der Flansch 2 besteht aus einem metallischen Werkstoff, bevorzugt aus Aluminium. In der dargestellten Ausführungsform weist der Flansch einen zylindrischen Mediendurchlass 3 mit der Symmetrieachse A auf. Der Mediendurchlass hat einen Durchmesser von ca. 40 mm. Der sich an den Mediendurchlass in radial nach außen weisender Richtung anschließende ringförmige Anlageabschnitt 5 besitzt einen Außenkonus. Die den Au-ßenkonus bildenden Flächen schließen hierbei einen Winkel von 60° ein. Die maximale Höhe des Anlageabschnitts beträgt ca. 11 mm. Der Anlageabschnitt weist darüber hinaus zwei umlaufende Vorsprünge 20 auf. Es können auch weniger oder mehr Vorsprünge am Anlageabschnitt angeordnet sein. Ebenso ist möglich, dass die Vorsprünge nur abschnittsweise am Anlageabschnitt angeordnet sind. An den Anlageabschnitt schließt sich in radial nach außen weisender Richtung der ringförmige Aufnahmeabschnitt 8 mit einer nutförmigen Querschnittsgeometrie an. Daran anschließend befindet sich der Befestigungsabschnitt 9 des Flansches mit vier Durchgangsbohrungen 10 und drei Befestigungseinrichtungen 11.

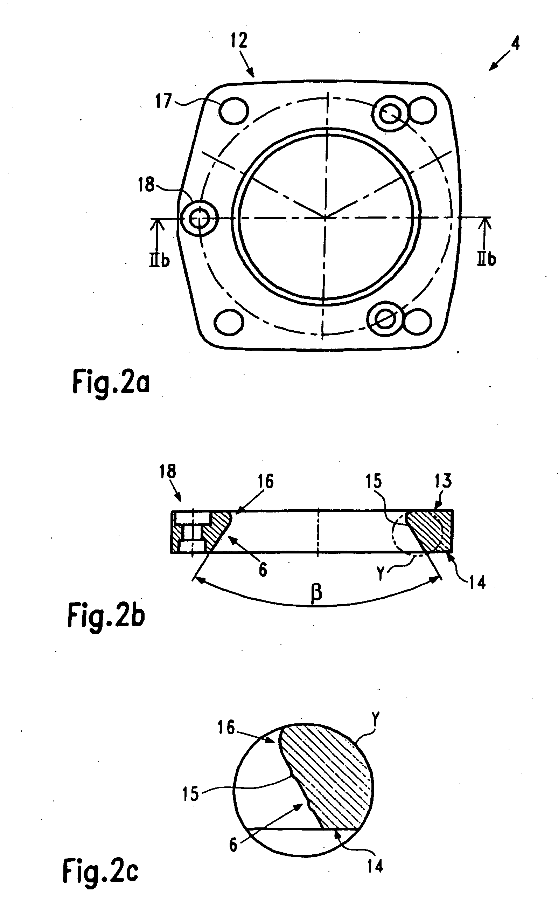

Die Figuren 2a und 2b zeigen eine Ausführungsform einer Spanneinrichtung der erfindungsgemäßen Verbindungsvorrichtung in Querschnitt und in Draufsicht, während Figur 2c ein Detail der Figur 2b darstellt.

Die Spanneinrichtung 4 besteht aus einem metallischen Werkstoff, bevorzugt aus Aluminium. In der dargestellten Ausführungsform umfasst die Spanneinrichtung einen Spannring 12 mit zwei gegenüberliegenden, im Wesentlichen parallelen Oberflächen 13, 14. Der Abstand der Oberflächen 13, 14 beträgt etwa 12 mm. Der Spannring weist auf seiner Innenseite den Spannabschnitt 6 und den Übergangsabschnitt 16 auf. Der Spannabschnitt besitzt eine konische Form und reicht dabei bis zur Oberfläche 14 des Spannrings, wo er einen Durchmesser von etwa 60 mm besitzt. Die den Konus bildenden Innenflächen des Spannrings schließen einen Winkel von 60° ein. Der Spannabschnitt weist zwei umlaufende Vorsprünge 15 auf. Der sich in axialer Richtung an den Spannabschnitt anschließende Übergangsabschnitt 16 weist im Querschnitt einen Radius auf und reicht bis zur anderen Oberfläche 13 des Spannrings. Dabei besitzt der Spannabschnitt in axialer Richtung eine deutlich größere Ausdehnung als der Übergangsabschnitt. Der Spannring weist darüber hinaus vier Durchgangsbohrungen 17 und drei Befestigungsbereiche 18 auf. Bei den Befestigungsbereichen handelt es sich um zweifach abgesetzte, durchgehende Bohrungen.

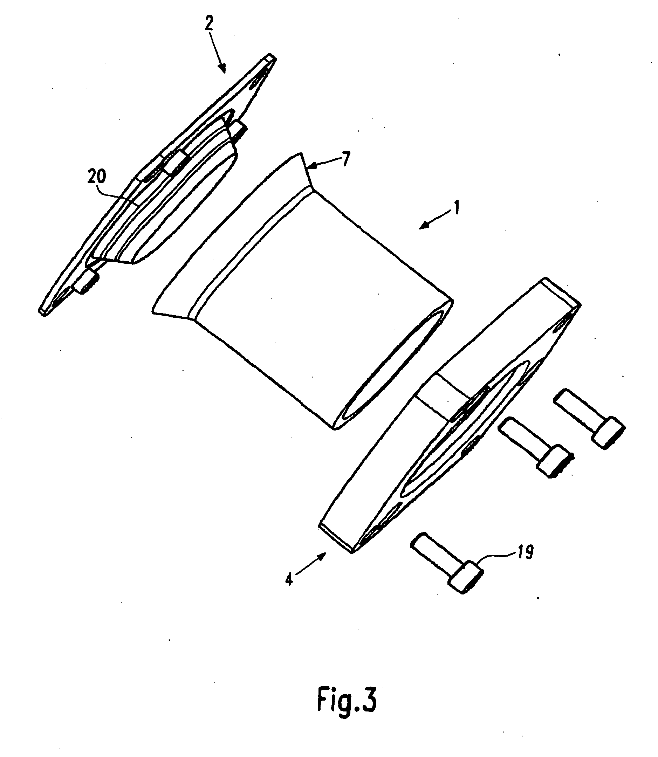

Figur 3 zeigt eine Ausführungsform der erfindungsgemäßen Verbindungsvorrichtung zusammen mit einer Leitung in Explosionsdarstellung.

Die Leitung 1 weist hierbei einen Endabschnitt 7 auf, der nach außen konisch geformt ist. Die Geometrie des Konus entspricht dabei der konusförmigen Geometrie des Anlageabschnittes 5 bzw. des Spannabschnittes 6. Schrauben 19 dienen der Befestigung der Spanneinrichtung 4 auf dem Flansch 2.

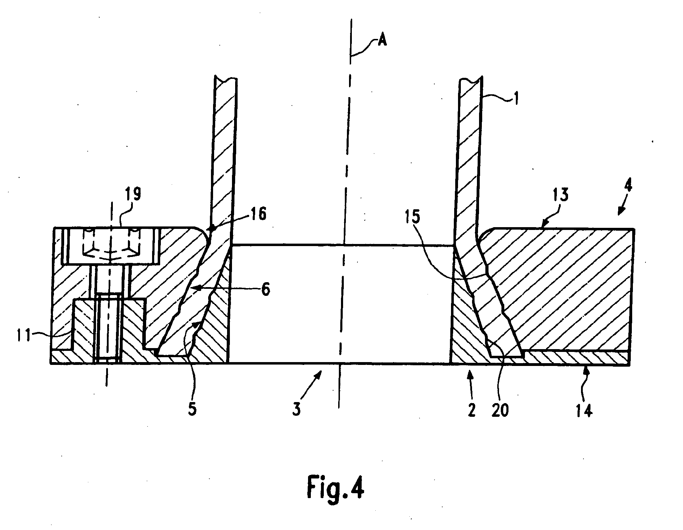

Figur 4 zeigt eine Ausführungsform der erfindungsgemäßen Verbindungsvorrichtung mit Leitung im Zusammenbau.

Die Spanneinrichtung 4 ist am Flansch 2 mit Hilfe von Schrauben 19 befestigt, wobei die Befestigung ebenso durch den Einsatz eines Kniehebels, eines Quick Connectors oder eines Schnappverschlusses denkbar ist. Das Gewinde der Schrauben 19 ist dabei in Eingriff mit dem Gewinde der Befestigungseinrichtung 11. Der Schaft der Schraube ist durch den Befestigungsbereich 18 in Form einer zweifach abgesetzten Durchgangsbohrung hindurchgesteckt, wobei der Schraubenkopf in Anlage mit dem ersten Absatz der Durchgangsbohrung kommt. Die Befestigungseinrichtung 11 ragt auf der der Schraubenkopf gegenüberliegenden Seite in den Befestigungsbereich 18, und ist in Anlage mit dem zweiten Absatz der Durchgangsbohrung. Der Endabschnitt 7 der Leitung 1 ist zwischen dem konusförmigen Anlageabschnitt 5 und dem konusförmigen Spannabschnitt 6 eingeklemmt, wobei die die Innenkontur des Spannabschnitts und die die Außenkontur des Anlageabschnitts bildenden Flächen im Wesentlichen parallel zueinander angeordnet sind. Die umlaufenden Vorsprünge 15 des Spannabschnitts und die umlaufenden Vorsprünge 20 des Anlageabschnitts sind formschlüssig mit der Leitung verbunden. Der sich in axialer Richtung an den Spannabschnitt anschließende Übergangsabschnitt 16 vermeidet aufgrund seiner geometrischen Form eine hohe Kantenpressung auf die Leitung im Bereich der Oberfläche 13 der Spanneinrichtung.

Nachfolgend wird die Wirkungs- und Funktionsweise der Erfindung näher erläutert.

Die Verbindungsvorrichtung dient zum Verbinden einer Leitung für den Transport von Medien, und wird beispielsweise im Motorraum von Kraftfahrzeugen zur Befestigung einer Kraftstoffleitung an einer entsprechenden Verbindungsstelle im Fahrzeug eingesetzt. Bei der aus dem Stand der Technik bekannten Verbindungsvorrichtung ist es notwendig, einen Endabschnitt der Leitung in flanschartiger Gestaltung zu formen, um den daraus resultierenden Flansch mittels eines Losflansches gegen einen weiteren Flansch, beispielsweise einen Rohrflansch, zu pressen und ihn damit zwischen Losflansch und Rohrflansch einzuklemmen. Diese Anordnung weist jedoch u.a. den Nachteil auf, dass die zuvor beschriebene Flanschanformung an die Leitung relativ aufwändig ist. Ein ähnlicher Aufwand ist hinsichtlich des Zusammenbaus der bekannten Verbindungsvorrichtung zu betreiben. Dies gilt in besonderem Maße für die Ausrichtung der Mediendurchlassöffnungen von Leitungsflansch und Rohrflansch, da diese möglichst genau zur Deckung kommen sollen. Die aufgrund von Durchgangsbohrungen innerhalb des Leitungsflansches vorhandene Materialschwächung in der aus dem Stand der Technik bekannten Verbindungsvorrichtung ist dabei ebenso von Nachteil.

Die erfindungsgemäße Verbindungsvorrichtung hingegen erlaubt eine schnelle und einfache Montage, wobei der Schritt des Anformens einer bestimmten Geometrie am einzuklemmenden Endabschnitt 7 der Leitung 1 optional ist und daher entfallen kann. Durch die geometrische Form des Anlageabschnitts 5 des Flansches 2 allein, beispielsweise durch eine konische Außengeometrie, ist es hierbei möglich, einen zylindrischen Endabschnitt der Leitung ohne großen Aufwand auf diesen aufzuschieben, wobei gleichzeitig eine Zentrierung der Leitung bezüglich des Mediendurchlasses 3 stattfindet. Die geometrische Form des Anlageabschnitts erlaubt dabei ebenso ein nahezu vollständiges Anlegen des Endabschnitts der Leitung an diesen. Dadurch wird die Leitung bereits ohne montierte Spanneinrichtung 4 sicher und stabil auf dem Flansch in zentrierter Position gehalten. Unterstützt wird dieses Halten bzw. Zentrieren durch den beispielsweise nutenförmigen Aufnahmeabschnitt 8 des Flansches, der sich in radial nach außen weisender Richtung an den Anlageabschnitt anschließt. Dabei kann der Endabschnitt der Leitung zumindest teilweise von der entsprechenden Nut aufgenommen werden.

Die beispielsweise in Form eines Spannringes 12 bereits vor dem Aufschieben der Leitung auf den Anlageabschnitt des Flansches auf die Leitung aufgeschobene Spanneinrichtung wird nach der Montage der Leitung am Flansch soweit in Richtung des Flansches geschoben, so dass das Gewinde der in die Befestigungsbereiche 18 eingebrachten Schrauben 19 mit dem Gewinde der Befestigungseinrichtungen 11 des Flansches in Eingriff kommen kann. Durch Festziehen der Schrauben wird der Abstand zwischen Flansch und Spanneinrichtung verringert, wodurch der Endabschnitt der Leitung zwischen Anlageabschnitt und Spannabschnitt 6 über seinen gesamten Umfang eingeklemmt wird. Der Spannabschnitt des Spannrings weist hierbei vorzugsweise die gleiche geometrische Form - beispielsweise eine konische Form - wie der Anlageabschnitt des Flansches auf, so dass die die Innenkontur des Spannabschnitts und die die Außenkontur des Anlageabschnitts bildenden Flächen in montiertem Zustand im Wesentlichen parallel zueinander angeordnet sind. Hierdurch wird eine besonders gleichmäßige Pressungsverteilung entlang des Endabschnitts der Leitung erzielt. Ein beispielsweise einen Radius im Querschnitt aufweisender Übergangsabschnitt 16 , der sich in axialer Richtung an den Spannabschnitt anschließt, verhindert hohe Kantenpressungen, die zu einer Beschädigung der Leitung führen können.

Vorsprünge 15 innerhalb des Spannabschnitts wirken unterstützend beim Verbinden von Flansch, Leitung und Spanneinrichtung. Ist es beispielsweise von Hand nicht einfach möglich, den Endabschnitt der Leitung soweit auf den Flansch aufzuschieben, dass er in Anlage mit dem Aufnahmeabschnitt kommt, so helfen die besagten Vorsprünge, die Leitung soweit weiterzuschieben, bis sie in Anlage mit dem Aufnahmeabschnitt kommt. Beim Festziehen der Schrauben 19 der Spanneinrichtung wird diese in Richtung Flansch bewegt, und der Spannabschnitt mit den Vorsprüngen kommt in Kontakt mit der Leitung. Die Vorsprünge können in die Oberfläche der Leitung eindringen und eine formschlüssige Verbindung realisieren. Diese formschlüssige Verbindung ist nun in der Lage, eine bessere Kraftübertragung zwischen Spannabschnitt und Leitung zu gewährleisten, so dass es zu einer forcierten Mitnahme der Leitung gemäß der Bewegung der Spanneinrichtung, bedingt durch das Festdrehen der Schrauben, kommt. Gleichzeitig wirken sich beispielsweise umlaufende Vorsprünge insgesamt günstig auf die Verbindung aus, da in diesem Bereich sowohl Formschluss, als auch eine erhöhte Pressung zusammenwirken können. Besagte positive Wirkung der Vorsprünge 15 am Spannabschnitt kann durch am Anlageabschnitt angeordnete Vorsprünge 20 noch gesteigert werden.

## Patentansprüche

1. Verbindungsvorrichtung zum Verbinden einer Leitung (1) für den Transport von Medien, die einen Flansch (2) mit einem Mediendurchlass (3) zum Durchleiten eines Mediums entlang einer Durchflussrichtung (A), vorzugsweise entlang einer Symmetrieachse, und eine Spanneinrichtung (4) umfasst, wobei der Flansch (2) einen Anlageabschnitt (5), der zumindest abschnittsweise gegenüber der Durchflussrichtung (A) geneigt ist, und die Spanneinrichtung (4) einen Spannabschnitt (6), der in montiertem Zustand zumindest abschnittsweise gegenüber der Durchflussrichtung (A) geneigt ist, aufweist, und der Flansch (2) und die Spanneinrichtung (4) lösbar miteinander verbindbar sind, so dass ein Endabschnitt (7) der Leitung (1) zwischen Anlageabschnitt (5) und Spannabschnitt (6) einklemmbar ist, und wobei sich in radial nach außen weisender Richtung an den Anlageabschnitt (5) ein ringförmiger Aufnahmeabschnitt (8) zur zumindest teilweisen Aufnahme des Endabschnitts (7) der Leitung (1) anschließt,
**dadurch gekennzeichnet, dass**
der Aufnahmeabschnitt (8) eine Nut aufweist, die eine Breite aufweist, die im Wesentlichen der Wanddicke der Leitung (1) entspricht.

2. Verbindungsvorrichtung nach Anspruch 1, **dadurch gekennzeichnet, dass** der Anlageabschnitt (5) und/oder der Spannabschnitt (6) zumindest abschnittsweise im Wesentlichen konusförmig ausgebildet ist.

3. Verbindungsvorrichtung nach Anspruch 1 oder 2, **dadurch gekennzeichnet, dass** der Anlageabschnitt (5) und/oder der Spannabschnitt (6) ringförmig ausgebildet ist.

4. Verbindungsvorrichtung nach zumindest einem der vorangegangenen Ansprüche, **dadurch gekennzeichnet, dass** der Innendurchmesser des Mediendurchlasses (3) zumindest abschnittsweise im Wesentlichen dem Innendurchmesser der Leitung (1) entspricht.

5. Verbindungsvorrichtung nach zumindest einem der vorangegangenen Ansprüche, **dadurch gekennzeichnet, dass** zumindest der der Leitung (1) zugewandte Abschnitt des Mediendurchlasses (3) einen Innendurchmesser aufweist, der im Wesentlichen dem Innendurchmesser der Leitung (1) entspricht.

6. Verbindungsvorrichtung nach zumindest einem der vorangegangenen Ansprüche, **dadurch gekennzeichnet, dass** sich an den Mediendurchlass (3) in radial nach außen weisender Richtung der Anlageabschnitt (5) anschließt.

7. Verbindungsvorrichtung nach zumindest einem der vorangegangenen Ansprüche, **dadurch gekennzeichnet, dass** der Anlageabschnitt (5) außenseitig angeordnet ist.

8. Verbindungsvorrichtung nach zumindest einem der vorangegangenen Anspruch, **dadurch gekennzeichnet, dass** die die Außenkontur des Anlageabschnitts (5) bildenden Flächen einen Konus formen und einen Winkel α zwischen 30 und 90° einschließen.

9. Verbindungsvorrichtung nach zumindest einem der vorangegangenen Ansprüche, **dadurch gekennzeichnet, dass** die die Außenkontur des Anlageabschnitts (5) bildenden Flächen einen Konus formen und einen Winkel α von 60° einschließen.

10. Verbindungsvorrichtung nach zumindest einem der vorangegangenen Ansprüche, **dadurch gekennzeichnet, dass** der Anlageabschnitt (5) wenigstens einen Vorsprung (20) aufweist.

11. Verbindungsvorrichtung nach Anspruch 10, **dadurch gekennzeichnet, dass** der wenigstens eine Vorsprung (20) umlaufend ist.

12. Verbindungsvorrichtung nach zumindest einem der vorangegangenen Ansprüche, **dadurch gekennzeichnet, dass** sich in radial nach außen weisender Richtung an den Aufnahmeabschnitt (8) des Flansches ein Befestigungsabschnitt (9) anschließt.

13. Verbindungsvorrichtung nach Anspruch 12, **dadurch gekennzeichnet, dass** die Dicke (D) des Befestigungsabschnitts (9) zwischen einem Drittel und einem Sechstel der maximalen Höhe (H) des Flansches (2) im Bereich des Anlageabschnitts (5) entspricht.

14. Verbindungsvorrichtung nach zumindest einem der vorangegangenen Ansprüche 12 und 13, **dadurch gekennzeichnet, dass** der Befestigungsabschnitt (9) wenigstens eine Durchgangsbohrung (10) für die Befestigung des Flansches (2) an einem anderen Teil aufweist.

15. Verbindungsvorrichtung nach zumindest einem der vorangegangenen Ansprüche 12 bis 14, **dadurch gekennzeichnet, dass** der Befestigungsabschnitt (9) wenigstens eine Befestigungseinrichtung (11) zur Befestigung der Spanneinrichtung (3) am Flansch (2) aufweist.

16. Verbindungsvorrichtung nach Anspruch 15, **dadurch gekennzeichnet, dass** die Befestigungseinrichtung (11) ein Gewinde aufweist.

17. Verbindungsvorrichtung nach zumindest einem der vorangegangenen Ansprüche, **dadurch gekennzeichnet, dass** die Spanneinrichtung (4) einen Spannring (12) mit zwei gegenüberliegenden, im Wesentlichen parallelen Oberflächen (13, 14) umfasst, deren Abstand im Wesentlichen der maximalen Höhe (H) des Flansches (2) im Bereich des Anlageabschnitts (5) entspricht.

18. Verbindungsvorrichtung nach Anspruch 17, **dadurch gekennzeichnet, dass** der Spannring (12) auf seiner Innenseite wenigstens den Spannabschnitt (6) aufweist.

19. Verbindungsvorrichtung nach zumindest einem der vorangegangenen Ansprüche 17 und 18, **dadurch gekennzeichnet, dass** der Spannabschnitt (6) zumindest bis zu einer der Oberflächen (13, 14) des Spannrings (12) reicht.

20. Verbindungsvorrichtung nach zumindest einem der vorangegangenen Ansprüche, **dadurch gekennzeichnet, dass** die die Innenkontur des Spannabschnitts (6) und die die Außenkontur des Anlageabschnitts (5) bildenden Flächen im montierten Zustand im Wesentlichen parallel zueinander angeordnet sind, wobei zwischen ihnen der Endabschnitt (7) der Leitung (1) eingeklemmt ist.

21. Verbindungsvorrichtung nach zumindest einem der vorangegangenen Ansprüche, **dadurch gekennzeichnet, dass** der Spannabschnitt (6) wenigstens einen Vorsprung (15) aufweist.

22. Verbindungsvorrichtung nach Anspruch 21, **dadurch gekennzeichnet, dass** der wenigstens eine Vorsprung (15) umlaufend ist.

23. Verbindungsvorrichtung nach zumindest einem der vorangegangenen Ansprüche, **dadurch gekennzeichnet, dass** der Spannring (12) zumindest einen Übergangsabschnitt (16) aufweist, der sich an den Spannabschnitt (6) in axialer Richtung anschließt.

24. Verbindungsvorrichtung nach Anspruch 23, **dadurch gekennzeichnet, dass** der Spannring (12) im Bereich des Übergangsabschnitts (16) einen minimalen Innenradius aufweist, der im Wesentlichen dem Außenradius der Leitung (1) entspricht.

25. Verbindungsvorrichtung nach Anspruch 23, **dadurch gekennzeichnet, dass** der Übergangsabschnitt (16) im Querschnitt einen Radius aufweist.

26. Verbindungsvorrichtung nach zumindest einem der vorangegangenen Ansprüche 23 bis 25, **dadurch gekennzeichnet, dass** der Übergangsabschnitt (16) bis zu einer der beiden Oberflächen (13, 14) des Spannrings reicht.

27. Verbindungsvorrichtung nach zumindest einem der vorangegangenen Ansprüche 23 bis 26, **dadurch gekennzeichnet, dass** der Übergangsabschnitt (16) eine geringere Ausdehnung in axialer Richtung aufweist als der Spannabschnitt (5).

28. Verbindungsvorrichtung nach zumindest einem der vorangegangenen Ansprüche, **dadurch gekennzeichnet, dass** die Spanneinrichtung (4) wenigstens eine Durchgangsbohrung (17) aufweist.

29. Verbindungsvorrichtung nach zumindest einem der vorangegangenen Ansprüche, **dadurch gekennzeichnet, dass** die Spanneinrichtung (4) wenigstens einen Befestigungsbereich (18) zum Befestigen der Spanneinrichtung (4) mit dem Flansch (2) aufweist.

30. Verbindungsvorrichtung nach zumindest einem der vorangegangenen Ansprüche, **dadurch gekennzeichnet, dass** der Endabschnitt (7) der Leitung (1) im Wesentlichen konusartig geformt ist.

31. Verbindungsvorrichtung nach zumindest einem der vorangegangenen Ansprüche, **dadurch gekennzeichnet, dass** die die Außenkontur des Endabschnitts (7) der Leitung (1) bildenden Flächen einen Konus formen und einen Winkel einschließen, der dem Winkel β entspricht, den die die Innenkontur des Spannabschnitts (6) bildenden und einen Konus formenden Flächen einschließen, und die die Innenkontur des Endabschnitts (7) der Leitung (1) bildenden Flächen einen Winkel einschließen, der dem Winkel α entspricht, den die die Außenkontur des Anlageabschnitts (5) bildenden und einen Konus formenden Flächen einschließen.

32. Verbindungsvorrichtung nach zumindest einem der vorangegangenen Ansprüche, **dadurch gekennzeichnet, dass** der Endabschnitt (7) der Leitung (1) mediendicht zwischen Anlageabschnitt (5) und Spannabschnitt (6) einklemmbar ist.

33. Verbindungsvorrichtung nach zumindest einem der vorangegangenen Ansprüche, **dadurch gekennzeichnet, dass** der Endabschnitt (7) der Leitung (1) zumindest abschnittsweise kraftschlüssig zwischen Anlageabschnitt (5) und Spannabschnitt (6) gehalten wird.

34. Verbindungsvorrichtung nach zumindest einem der vorangegangenen Ansprüche, **dadurch gekennzeichnet, dass** der Endabschnitt (7) der Leitung (1) zumindest, abschnittsweise formschlüssig zwischen Anlageabschnitt (5) und Spannabschnitt (6) gehalten wird.

35. Verbindungsvorrichtung nach zumindest einem der vorangegangenen Ansprüche, **dadurch gekennzeichnet, dass** die Leitung (1) flexibel ist.

36. Verbindungsvorrichtung nach zumindest einem der vorangegangenen Ansprüche, **dadurch gekennzeichnet, dass** die Leitung (1) aus einem polymeren Werkstoff, vorzugsweise aus einem Elastomer, besteht.

37. Verbindungsvorrichtung nach zumindest einem der vorangegangenen Ansprüche, **dadurch gekennzeichnet, dass** der Flansch (2) und die Spanneinrichtung (4) starr sind.

38. Verbindungsvorrichtung nach zumindest einem der vorangegangenen Ansprüche, **dadurch gekennzeichnet, dass** der Flansch (2) und die Spanneinrichtung (4) aus einem metallischen Werkstoff, vorzugsweise aus Aluminium, bestehen.

39. Leitung für den Transport von Medien mit der Verbindungsvorrichtung nach zumindest einem der vorangegangenen Ansprüche.

## Claims

1. Connection device for connecting a line (1) for the transport of media, comprising a flange (2) with a medium passage (3) for passing through a medium along a flow direction (A), preferably along an axis of symmetry, and comprising a clamping means (4), the flange (2) comprising a contact section (5) which is inclined at an angle with respect to at least certain sections of the flow direction (A), and the clamping means (4) comprising a clamping section (6) which is inclined at an angle with respect to at least certain sections of the flow direction (A) in the mounted state, and the flange (2) and the clamping means (4) being separably connectable, so that an end section (7) of the line (1) can be clamped between the contact section (5) and the clamping section (6), and an annular female section (8) for at least partially accommodating the end section (7) of the line (1) adjoins the contact section (5) in the direction pointing radially outwards,
**characterized in that**
the female section (8) has a groove with a width essentially corresponding to the wall thickness of the line (1).

2. Connection device according to claim 1, **characterized in that** the contact section (5) and/or the clamping section (6) have at least in sections an essentially conical design.

3. Connection device according to claim 1 or 2, **characterized in that** the contact section (5) and/or the clamping section (6) have an annular design.

4. Connection device according to at least one of the preceding claims, **characterized in that** the internal diameter of the medium passage (3) at least in sections essentially corresponds to the internal diameter of the line (1).

5. Connection device according to at least one of the preceding claims, **characterized in that** at least the section of the medium passage (3) facing the line (1) has an internal diameter essentially corresponding to the internal diameter of the line (1).

6. Connection device according to at least one of the preceding claims, **characterized in that** the contact section (5) follows the medium passage (3) in the direction radially facing outwards

7. Connection device according to at least one of the preceding claims, **characterized in that** the contact section (5) is arranged outside.

8. Connection device according to at least one of the preceding claims, **characterized in that** the surfaces forming the outer contour of the contact section (5) form a cone and include an angle α of between 30° and 90°.

9. Connection device according to at least one of the preceding claims, **characterized in that** the surfaces forming the outer contour of the contact section (5) form a cone and include an angle α of 60°.

10. Connection device according to at least one of the preceding claims, **characterized in that** the contact section (5) comprises at least one projection (20).

11. Connection device according to claim 10, **characterized in that** the at least one projection (20) extends circumferentially.

12. Connection device according to at least one of the preceding claims, **characterized in that** a fixing section (9) follows the female section (8) of the flange in the direction radially facing outwards.

13. Connection device according to claim 12, **characterized in that** the thickness (D) of the fixing section (9) corresponds to between one third and one sixth of the maximum height (H) of the flange (2) in the area of the contact section (5).

14. Connection device according to at least one of preceding claims 12 and 13, **characterized in that** the fixing section (9) comprises at least one through bore (10) for fixing the flange (2) at another part.

15. Connection device according to at least one of preceding claims 12 to 14, **characterized in that** the fixing section (9) comprises at least one fixing means (11) for fixing the clamping means (3) at the flange (2).

16. Connection device according to claim 15, **characterized in that** the fixing means (11) comprises a thread.

17. Connection device according to at least one of the preceding claims, **characterized in that** the clamping means (4) comprises a clamping ring (12) with two opposite, essentially parallel surfaces (13, 14), the distance of which essentially corresponds to the maximum height (H) of the flange (2) in the area of the contact section (5).

18. Connection device according to claim 17, **characterized in that** the clamping ring (12) comprises at least the clamping section (6) at its interior surface.

19. Connection device according to at least one of preceding claims 17 and 18, **characterized in that** the clamping section (6) extends at least to one of the surfaces (13, 14) of the clamping ring (12).

20. Connection device according to at least one of the preceding claims, **characterized in that** the surfaces forming the inner contour of the clamping section (6) and forming the outer contour of the contact section (5) in the assembled state are arranged essentially in parallel one to another, the end section (7) of the line (1) being clamped between them.

21. Connection device at least according to one of the preceding claims, **characterized in that** the clamping section (6) comprises at least one projection (15).

22. Connection device according to claim 21, **characterized in that** the at least one projection (15) extends circumferentially.

23. Connection device according to at least one of the preceding claims, **characterized in that** the clamping ring (12) comprises at least one transition section (16) following the clamping section (6) in the axial direction.

24. Connection device according to claim 23, **characterized in that** the clamping ring (12) comprises a minimum inner radius in the area of the transition section (16) essentially corresponding to the outer radius of the line (1).

25. Connection device according to claim 23, **characterized in that** the transition section (16) comprises a radius in the cross-section.

26. Connection device according to at least one of preceding claims 23 to 25, **characterized in that** the transition section (16) extends to one of the two surfaces (13, 14) of the clamping ring.

27. Connection device according to at least one of preceding claims 23 to 26, **characterized in that** the transition section (16) has a smaller extension in the axial direction than the clamping section (5).

28. Connection device according to at least one of the preceding claims, **characterized in that** the clamping means (4) comprises at least one through bore (17).

29. Connection device according to at least one of the preceding claims, **characterized in that** the clamping means (4) comprises at least one fixing area (18) for fixing the clamping means (4) with the flange (2).

30. Connection device according to at least one of the preceding claims, **characterized in that** the end section (7) of the line (1) has an essentially conical shape.

31. Connection device according to at least one of the preceding claims, **characterized in that** the surfaces forming the outer contour of the end section (7) of the line (1) form a cone and include an angle corresponding to the angle β included by the surfaces forming the inner contour of the clamping section (6) and forming a cone, and the surfaces forming the inner contour of the end section (7) of the line (1) include an angle corresponding to the angle α included by the surfaces forming the outer contour of the contact section (5) and forming a cone.

32. Connection device according to at least one of the preceding claims, **characterized in that** the end section (7) of the line (1) can be clamped between the contact section (5) and the clamping section (6) so as to be impermeable to media.

33. Connection device according to at least one of the preceding claims, **characterized in that** the end section (7) of the line (1) is at least in sections non-positively held between the contact section (5) and the clamping section (6).

34. Connection device according to at least one of the preceding claims, **characterized in that** the end section (7) of the line (1) is at least in sections positively held between the contact section (5) and the clamping section (6).

35. Connection device according to at least one of the preceding claims, **characterized in that** the line (1) is flexible.

36. Connection device according to at least one of the preceding claims, **characterized in that** the line (1) consists of a polymer material, preferably of an elastomer.

37. Connection device according to at least one of the preceding claims, **characterized in that** the flange (2) and the clamping means (4) are rigid.

38. Connection device according to at least one of the preceding claims, **characterized in that** the flange (2) and the clamping means (4) consist of a metallic material, preferably of aluminium.

39. Line for the transport of media with the connection device according to at least one of the preceding claims.

## Revendications

1. Dispositif de raccordement pour raccorder une conduite (1) pour le transport de produits, qui comprend une bride (2) avec un passage pour produit (3) destiné au passage d'un produit dans un sens d'écoulement (A), de préférence le long d'un axe de symétrie, et un dispositif de serrage (4), la bride (2) présentant une partie d'application (5) qui est inclinée au moins par endroits par rapport au sens d'écoulement (A), tandis que le dispositif de serrage (4) présente une partie de serrage (6) qui, en position montée, est inclinée au moins par endroits par rapport au sens d'écoulement (A), et la bride (2) et le dispositif de serrage (4) étant aptes à être reliés de manière amovible de sorte qu'une partie d'extrémité (7) de la conduite (1) est apte à être serrée entre la partie d'application (5) et la partie de serrage (6), et une partie de réception annulaire (8) destinée à recevoir au moins partiellement la partie d'extrémité (7) de la conduite (1) faisant suite à la partie d'application (5) dans un sens dirigé radialement vers l'extérieur,
**caractérisé en ce que** la partie de réception (8) a une rainure qui présente une largeur correspondant globalement à l'épaisseur de paroi de la conduite (1).

2. Dispositif de raccordement selon la revendication 1, **caractérisé en ce que** la partie d'application (5) et la partie de serrage (6) ont une forme globalement conique au moins par endroits.

3. Dispositif de raccordement selon la revendication 1 ou 2, **caractérisé en ce que** la partie d'application (5) et/ou la partie de serrage (6) ont une forme annulaire.

4. Dispositif de raccordement selon l'une au moins des revendications précédentes, **caractérisé en ce que** le diamètre intérieur du passage pour produit (3) correspond globalement, au moins par endroits, au diamètre intérieur de la conduite (1).

5. Dispositif de raccordement selon l'une au moins des revendications précédentes, **caractérisé en ce que** la partie, au moins, du passage pour produit (3) qui est tournée vers la conduite (1) présente un diamètre intérieur qui correspond globalement au diamètre intérieur de la conduite (1).

6. Dispositif de raccordement selon l'une au moins des revendications précédentes, **caractérisé en ce que** la partie d'application (5) fait suite au passage pour produit (3) dans un sens dirigé radialement vers l'extérieur.

7. Dispositif de raccordement selon l'une au moins des revendications précédentes, **caractérisé en ce que** la partie d'application (5) est disposée côté extérieur.

8. Dispositif de raccordement selon l'une au moins des revendications précédentes, **caractérisé en ce que** les surfaces qui forment le contour extérieur de la partie d'application (5) forment un cône et définissent un angle α situé entre 30 et 90°.

9. Dispositif de raccordement selon l'une au moins des revendications précédentes, **caractérisé en ce que** les surfaces qui forment le contour extérieur de la partie d'application (5) forment un cône et définissent un angle α de 60°.

10. Dispositif de raccordement selon l'une au moins des revendications précédentes, **caractérisé en ce que** la partie d'application (5) présente au moins une saillie (20).

11. Dispositif de raccordement selon la revendication 10, **caractérisé en ce que** la ou les saillies (20) sont prévues sur tout le tour.

12. Dispositif de raccordement selon l'une au moins des revendications précédentes, **caractérisé en ce qu'**une partie de fixation (9) fait suite à la partie de réception (8) de la bride dans un sens dirigé radialement vers l'extérieur.

13. Dispositif de raccordement selon la revendication 12, **caractérisé en ce que** l'épaisseur (D) de la partie de fixation (9) correspond à une valeur située entre un tiers et un sixième de la hauteur maximale (H) de la bride (2) dans la zone de la partie d'application (5).

14. Dispositif de raccordement selon l'une au moins des revendications 12 et 13 précédentes, **caractérisé en ce que** la partie de fixation (9) présente au moins un perçage traversant (10) pour la fixation de la bride (2) à une autre pièce.

15. Dispositif de raccordement selon l'une au moins des revendications 12 à 14 précédentes, **caractérisé en ce que** la partie de fixation (9) présente au moins un dispositif de fixation (11) pour la fixation du dispositif de serrage (3) à la bride (2).

16. Dispositif de raccordement selon la revendication 15, **caractérisé en ce que** le dispositif de fixation (11) présente un filetage.

17. Dispositif de raccordement selon l'une au moins des revendications précédentes, **caractérisé en ce que** le dispositif de serrage (4) comprend un anneau de serrage (12) avec deux surfaces opposées (13, 14) globalement parallèles dont l'écartement correspond globalement à la hauteur maximale (H) de la bride (2) dans la zone de la partie d'application (5).

18. Dispositif de raccordement selon la revendication 17, **caractérisé en ce que** l'anneau de serrage (12) présente sur son côté intérieur au moins la partie de serrage (6).

19. Dispositif de raccordement selon l'une au moins des revendications 17 et 18 précédentes, **caractérisé en ce que** la partie de serrage (6) va au moins jusqu'à l'une des surfaces (13, 14) de l'anneau de serrage (12).

20. Dispositif de raccordement selon l'une au moins des revendications précédentes, **caractérisé en ce que** les surfaces qui forment le contour intérieur de la partie de serrage (6) et les surfaces qui forment le contour extérieur de la partie d'application (5) sont disposées, en position montée, globalement parallèlement, la partie d'extrémité (7) de la conduite (1) étant serrée entre elles.

21. Dispositif de raccordement selon l'une au moins des revendications précédentes, **caractérisé en ce que** la partie de serrage (6) présente au moins une saillie (15).

22. Dispositif de raccordement selon la revendication 21, **caractérisé en ce que** la ou les saillies (15) sont prévues sur tout le tour.

23. Dispositif de raccordement selon l'une au moins des revendications précédentes, **caractérisé en ce que** l'anneau de serrage (12) présente au moins une partie de transition (16) qui fait suite à la partie de serrage (6), dans le sens axial.

24. Dispositif de raccordement selon la revendication 23, **caractérisé en ce que** l'anneau de serrage (12) présente dans la zone de la partie de transition (16) un rayon intérieur minimal qui correspond globalement au rayon extérieur de la conduite (1).

25. Dispositif de raccordement selon la revendication 23, **caractérisé en ce que** la partie de transition (16) présente un rayon en section transversale.

26. Dispositif de raccordement selon l'une au moins des revendications 23 à 25 précédentes, **caractérisé en ce que** la partie de transition (16) va jusqu'à l'une des deux surfaces (13, 14) de l'anneau de serrage.

27. Dispositif de raccordement selon l'une au moins des revendications 23 à 26 précédentes, **caractérisé en ce que** la partie de transition (16) présente une étendue plus petite, dans le sens axial, que la partie de serrage (5).

28. Dispositif de raccordement selon l'une au moins des revendications précédentes, **caractérisé en ce que** le dispositif de serrage (4) présente au moins un perçage traversant (17).

29. Dispositif de raccordement selon l'une au moins des revendications précédentes, **caractérisé en ce que** le dispositif de serrage (4) présente au moins une zone de fixation (18) pour sa fixation avec la bride (2).

30. Dispositif de raccordement selon l'une au moins des revendications précédentes, **caractérisé en ce que** la partie d'extrémité (7) de la conduite (1) a une forme globalement conique.

31. Dispositif de raccordement selon l'une au moins des revendications précédentes, **caractérisé en ce que** les surfaces qui forment le contour extérieur de la partie d'extrémité (7) de la conduite (1) forment un cône et définissent un angle qui correspond à l'angle β défini par les surfaces qui forment le contour intérieur de la partie de serrage (6) et qui forment un cône, et les surfaces qui forment le contour intérieur de la partie d'extrémité (7) de la conduite (1) définissent un angle qui correspond à l'angle α défini par les surfaces qui forment le contour extérieur de la partie d'application (5) et qui forment un cône.

32. Dispositif de raccordement selon l'une au moins des revendications précédentes, **caractérisé en ce que** la partie d'extrémité (7) de la conduite (1) est apte à être serrée de manière étanche au produit entre la partie d'application (5) et la partie de serrage (6).

33. Dispositif de raccordement selon l'une au moins des revendications précédentes, **caractérisé en ce que** la partie d'extrémité (7) de la conduite (1) est retenue par force, au moins par zones, entre la partie d'application (5) et la partie de serrage (6).

34. Dispositif de raccordement selon l'une au moins des revendications précédentes, **caractérisé en ce que** la partie d'extrémité (7) de la conduite (1) est retenue par complémentarité de forme, au moins par zones, entre la partie d'application (5) et la partie de serrage (5).

35. Dispositif de raccordement selon l'une au moins des revendications précédentes, **caractérisé en ce que** la conduite (1) est flexible.

36. Dispositif de raccordement selon l'une au moins des revendications précédentes, **caractérisé en ce que** la conduite (1) se compose d'un matériau polymère, de préférence d'un élastomère.

37. Dispositif de raccordement selon l'une au moins des revendications précédentes, **caractérisé en ce que** la bride (2) et le dispositif de serrage (4) sont rigides.

38. Dispositif de raccordement selon l'une au moins des revendications précédentes, **caractérisé en ce que** la bride (2) et le dispositif de serrage (4) se composent d'un matériau métallique, de préférence d'aluminium.

39. Conduite pour le transport de produits, avec le dispositif de raccordement selon l'une au moins des revendications précédentes.
